# EUROPEAN PATENT SPECIFICATION

(11) **EP 3 722 135 B1**
(45) Date of publication and mention of the grant of the patent: **02.03.2022**
(21) Application number: 19167857.2
(22) Date of filing: 08.04.2019
(51) Int. Cl.: B60K 35/00

(54) **DISPLAY DEVICE COMPRISING A DISPLAY UNIT THAT IS SWITCHABLE BETWEEN A TRANSPARENT STATE AND AN OPAQUE STATE, AND MOTOR VEHICLE**
ANZEIGEVORRICHTUNG MIT EINER ANZEIGEEINHEIT, DIE ZWISCHEN EINEM TRANSPARENTEN ZUSTAND UND EINEM OPAKEN ZUSTAND UMSCHALTBAR IST, UND KRAFTFAHRZEUG
AFFICHEUR COMPRENANT UNE UNITÉ D'AFFICHAGE COMMUTABLE ENTRE UN ÉTAT TRANSPARENT ET UN ÉTAT OPAQUE ET VÉHICULE À MOTEUR

(43) Date of publication of application: 14.10.2020
(73) Proprietor: Audi AG, 85045 Ingolstadt (DE)
(72) Inventor: Hélot, Jacques, 85051 Ingolstadt (DE); Mertens, Joris, 85051 Ingolstadt (DE)

(56) References cited:
- DE-A1-102017 215 771
- JP-A- 2002 090 782
- US-A1- 2018 217 429

## Description

The invention relates to a display device comprising a display unit. The display unit has a transparent screen element and a sight protection element, the latter being switchable between a transparent state and an opaque state.

A switchable foil in combination with a screen is a known display assembly for motor vehicles. A collateral aspect of a T-OLED ("transparent organic light emitting diode display") display is that a graphical element, for example a graphical user interface, is visible from both sides, in other words visible for a passenger sitting in the interior of the vehicle and visible for, e.g., a pedestrian outside of the vehicle. This dual visibility can be further enhanced by applying two reflective foils. The drawback of using a switchable foils that the quality of the black background is compromised for one viewing direction.

When, for example, the position of the switchable foil is optimized for visibility from the inside, the foil is positioned outwards and the exemplary T-OLED inwards. Thus, a black background can be seen from the inside. In order for the graphical element to be visible from the outside, the switchable foil has to be switched to transparent so that the T-OLED graphical element is visible. Therefore, the blackness is only the non-transparency of the display. When the display has a transparency of 50 %, the blackness is 50 %.

US 2018/0149777 A1 describes a surface display unit that incorporates an opaque screen and an image panel.

US 2018/0217429 A1 discloses a display that includes a transparent display element or layer such as at least one transparent organic light emitting diode (T-OLED) element and at least one active shutter (AS) element or layer such as a liquid crystal shutter.

US 2018/0004059 A1 describes an example that determines a setting to present presentation on the transparent display layer of a display, adjust a transparency of a first adjustable transparency layer of the display based on the first setting to present the presentation through the first adjustable transparency layer, and adjust a transparency of a second adjustable transparency layer of the display based on the first setting to prevent the presentation from being presented through the second adjustable transparency layer.

DE 10 2017 215 771 A1 relates to a vehicle with a display unit that is readable from outside the vehicle.

JP 2002-090782 A describes a drive method of a display apparatus in which a light transmissive display and a light reflection display is possible.

It is an object of the invention to provide a display that provides more degrees of freedom with respect to dual visibility and thereby saving installation space.

The object is solved by the disclosed display device according to the independent claim. Advantageous embodiments of the invention are indicated in the dependent claims.

The idea is to provide a display device with a display unit, whereby said display unit is composed of two transparent screen elements and one sight protection element. In other words, said display unit comprises only two transparent screen elements and only one sight protection element. The two transparent screen elements and the one sight protection element are arranged in a sandwiched manner, such that the sight protection element is sandwiched between the two transparent screen elements. In other words, the two outer layers of the sandwiched constructions are transparent screen elements, and the middle layer is the sight protection element, that is constructed to be switched from a transparent state to an opaque state, and vice versa. Like this, the display unit requires fewer installation space but provides dual visibility. When the sight protection element is set to a high degree of opacity, dual visibility is still possible and a contrast is high for both screens.

The display device disclosed herein comprises a display unit, said display unit being composed of two transparent screen elements and one sight protection element. A display unit is defined as a component or construction part or group of construction parts to display a graphical element (or "display element"), for example a graphical user interface ("GUI"). A sight protection element, that could likewise be called visibility protection element, visual protection element or switchable blind element, is defined as a structural element or component or member that is designed to set or adjust or regulate a degree of transparency (and opacity, respectively) of the display unit. In other words, the sight protection element is likewise designed to set/regulate/adjust a degree of opacity. Said sight protection element may be a screen that has segments, said segments being switchable from opaque to transparent, and vice versa.

Said sight protection element is also configured to set a respective degree of opacity/transparency for some subareas only. The display device may, for example, be configured as an electronic instrument panel or dashboard, and the display unit may, for example, comprise a so-called smart glass display ("Polymer-Display-Liquid-Crystal-Display", "PDLC-Display"), or a transparent segmented monochrome LCD-Display (transparent or black), or intelligent display. Said sight protection element may preferably be a switchable film or switchable foil. The display device, for example a control unit of said display device, may adjust the transparency of the sight protection element (and thus also its opacity) by applying a voltage or electrical charge to the sight protection element. In other words, the sight protection element is switchable between a transparent state and a non-transparent state, and the transparency of single areas of the sight protection element can be changed. A much higher variability of possible ways to display graphical contents is achieved.

At least one of said transparent screen elements may be a T-OLED, a Polymer Dispersed Liquid Crystal Screen ("PDLC", "Smart Glass") or a thinfilm-transistor-display or liquid crystal display (TFT, LCD). The advantage of a T-OLED, however, is that the colours of a T-OLED emit light, and black is passive, in other words, no light is emitted. The use of a T-OLED leads to higher contrast than, e.g., when using a TFT-Display that has backlight everywhere, or any other technology that allows to have a display layer that has self-lighting-coloured pixels and a second layer with segments that may be either black or transparent. Thus, preferably both of said transparent screen elements may be transparent organic light emitting diode displays (T-OLED), polymer dispersed liquid crystal screen displays (PDCL), or super liquid crystal displays (S-LCD).

The display device disclosed herein is constructed that the sight protection element is sandwiched between the two transparent screen elements, such that one display area of each of the two transparent screen elements faces one of the planar areas of the sight protection element. As a result, the other respective display area of the two transparent screen elements is uncovered. In other words, both the transparent screen elements and the sight protection element are designed to be planar, and the sight protection element is sandwiched between the planes (or display areas) of the transparent screen elements. In other words, the sight protection element and the transparent screen elements are arranged in a planar manner. The assembly, though, may be curved in one direction.

The advantage is that the display unit is constructed for dual visibility, and, depending on the transparency (or opacity) of the cited protection element, different graphical information may be displayed for someone in the exterior of the vehicle and someone in the interior of the vehicle. When the sight protection element is at least partially set to an opaque state, a graphical element displayed on one of the transparent screen elements is not overlaid by a graphical element displayed on the other transparent screen element. In case the sight protection element is set to a high degree of transparency, both transparent screen elements may, for example, display the same graphical element in the same display area, such that the graphical element overlays and appears to be very bright and three-dimensional. All in all, a large variety of ways to display a graphical element or graphical elements is provided, and at the same time the display unit needs few installation space only.

The image quality is very good, both seen from the inside and the outside. It is possible to show a different image to the outside and to the inside on the same area of the display. It is also possible to double the luminosity of the same graphical element when the switchable sight protection element is transparent.

In order to further increase the impression of two layers, one of the transparent screen elements comprises a spacer element, said spacer element being arranged at the sight protection element in a planar manner. A spacer element is defined as a construction part or element that has a predetermined thickness in order to create a distance in the extent of the spacer element's thickness between a display area of the transparent screen element and the sight protection element. The spacer element may thus preferably also be constructed in a planar manner. The spacer element may also be called "spacer", and may preferably comprise and/or be made of glass. Another advantage is that a user may navigate between two display layers that are conceivable due to the spacer element.

Optionally, the display device may comprise a control unit or controller. The control unit may be designed as an electronic control unit (ECU) or as an integrated circuit. Preferably, the control unit may comprise a processor unit, i.e. a component for data processing, e.g. a CPU. The optional processing unit may comprise at least one micro-processor and/or at least one microchip. Said control unit may be configured to provide a first control signal that describes a graphical element to be displayed on one of the transparent screen elements, to provide a second control signal that describes a graphical element to be displayed on the other transparent screen elements, and to control a degree of transparency (and thus a degree of opacity) of the sight protection element. Said provided control signals may also describe an area of the respective transparent screen element, on which the graphic element is to be displayed. The above mentioned advantages are supported by this embodiment.

The above mentioned advantages also yield from yet another embodiment of the display device disclosed herein, wherein the control unit is configured to operate the display unit in one or more of the following optional operational modes.

In a first operational mode, the sight protection element is at least partially transparent, in other words the sight protection element has a degree of transparency (or opacity) that allows light from or both of the transparent screen element to shine through the sight protection element. In other words, in said first operational mode, the sight protection element is not entirely opaque. In said first operational mode, the sight protection element may preferably have a maximum degree of transparency. Said first operational mode also comprises that both provided control signals describe the same graphical element. As a result, said first operational mode provides that the graphical element shown on one of the transparent screen element can be seen through the sight protection element, and both transparent screen elements display the same graphical element. Preferably, the graphical element may be displayed in the same areas of the transparent screen elements, such that the image of the graphical elements overlay when seen by a user. In this first operational mode, the user sees one image of the graphical element that is very bright and also appear slightly three-dimensional.

A second operational mode provides that the sight protection element is at least partially transparent, and preferably the sight protection element has a maximum degree of transparency. Also, the second operational mode provides that the provided control signals describe different graphical elements, and/or different areas of the respective transparent screen element, on which the respective graphical element is to be displayed. In the second operational mode, the display unit is operating in a manner that a user can see graphical content on different display areas or layers of the display unit.

Alternatively or additionally, the control unit may be configured to operate the display unit in a third operational mode, in which the sight protection element is at least partially opaque, preferably in which the sight protection element has a maximum degree of opacity. In said third operational mode, the provided control signals may describe different graphical elements. In the third operational mode, the display unit is configured for dual visibility with a high contrast on each side. Different graphical contents may be displayed for different persons depending on which side of the display unit they are looking at the display unit. The person outside of the vehicle may, for example, see an information on, for example, technical effects of the vehicle, or a welcome text, whereas the person inside may, for example, see user specific information that is protected from the person outside the vehicle.

The sandwich construction of the two transparent screen elements and the sandwich side element may, according to another embodiment of the display device, comprise that each planar area of the sight protection element is in contact with one of the transparent screen elements' display areas facing the sight protection element, preferably wherein the sight protection element is laminated to the transparent screen elements. Thus, internal reflections are reduced or even omitted.

The above mentioned object is also solved by a motor vehicle comprising an embodiment of the disclosed display device. The motor vehicle may preferably be designed/constructed as a passenger vehicle, a motor bike, or a truck. Preferably, in one embodiment of the motor vehicle, the display unit of the display device may be arranged such that a graphical element displayed on one of the transparent screen elements is visible from the vehicle's exterior, that is from outside, and such that a graphical element displayed by the second transparent screen element is visible from the vehicle's interior, that is from inside of the vehicle. In other words, one display area or a display area of one of the transparent screen elements may be facing the outside, and the display area or display area from the other transparent screen element may be facing the interior.

The above mentioned object is also solved by an electronic device comprising an embodiment of the disclosed display device. The electronic device may preferably be an electronic device for cashiers, doctors, or bank officers.

Advantageous embodiments of the motor vehicle according to the present invention are to be regarded as advantageous embodiments of the display device according to the present invention, and vice versa.

In the following, embodiments of the invention are described. The figures show in:
- Fig. 1: a schematic illustration of a preferred embodiment of the motor vehicle in a front-perspective view described herein,

- Fig. 2: a schematic illustration of a cross section of a preferred embodiment of the display device described herein,
- Fig. 3: a schematic illustration of a cross section of a further preferred embodiment of the display device described herein,
- Fig. 4: a schematic illustration of a cross section of a preferred embodiment of the display device described herein, and
- Fig. 5: a schematic illustration of a cross section of yet another preferred embodiment of the display device described herein.

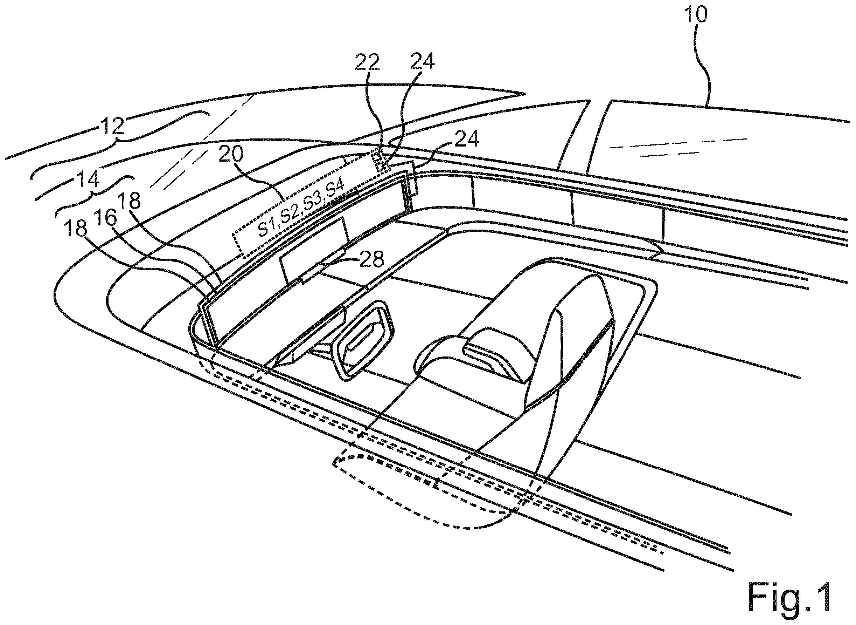

Fig. 1 exemplifies the principle of the method disclosed herein, and the disclosed display device 12. The display device 12 as displayed in Fig. 1 may preferably be arranged in a motor vehicle 10, e.g., in car or in a truck.

The display device 12 comprises a display unit 14, wherein a display surface may comprise several predetermined subareas. The display unit 14 comprises one sight protection element 16. The sight protection element 16 may, for example, be or comprise a switchable foil or a switchable film, for example a PDLC film ("polymer-dispersed liquid-crystal film", "Smart glass"), e.g., a Gauzy film; or a segmented transparent LCD display, preferably a segmented transparent monochrome LCD display, more preferably a black segmented transparent monochrome LCD display.

The display unit 14 is composed of said sight protection element 16 and two planar, transparent screen elements 18, of which one or each may, for example, be or comprise an LCD display, a transparent light emitting display ("T-OLED"), or a TFT display (thin-film display), preferably a T-OLED. Each of the transparent screen elements 18 is designed to display a graphical content. The sight protection element 16 may most preferably be laminated on the transparent screen elements 18. A laminated display unit 14 has a very homogenous look and shows all colors including black.

The display unit 14 of the example of Fig. 1 is exemplary shown as a free standing one, i.e. a standalone display unit 14. Said display unit 14 may, for example, be arranged in a distance to a windshield of the vehicle 10, and/or is preferably arranged so that graphical content shown by one of the transparent screen elements 18 is visible from the outside and through the windshield of vehicle 10, and graphical content shown by the other transparent screen element 18 is visible from a passenger sitting inside vehicle 10. Optionally, a front hood of the vehicle 10 may have a concave design, so that the user may see through the display unit 14 and over the concave hood onto the road. Alternatively, the display unit 14 may be located high enough so that with a regular car design a user may look through the display unit 14 on the road.

The display device 12 may optionally comprise a control unit 20, which may be designed as an electronic control unit. Control unit 20 may optionally comprise a processor unit 22, and/or a storage unit 24. The control unit 20 is connected with the display unit 14 via a data communication link 26, preferably a wireless data communication link 26, e.g. a WIFI connection, or a wire-bound data communication link 26, e.g. a data bus of motor vehicle 10.

In the example of Fig. 1, the display screen unit may display a graphical element 28, for example a graphical user interface ("GUI"), a picture, a computer animation or a movie on, e.g., the inner transparent screen element 18, i.e. the transparent screen element 18 facing a passenger. When displaying said graphical element 28, control unit 20 may switch the sight protection element 16 or a predetermined area thereof to an opaque state (optional method step S1), or a substantially opaque state of, e.g., less than 25 percent of transparency. The optional method steps that may be performed by control unit 20 are described below.

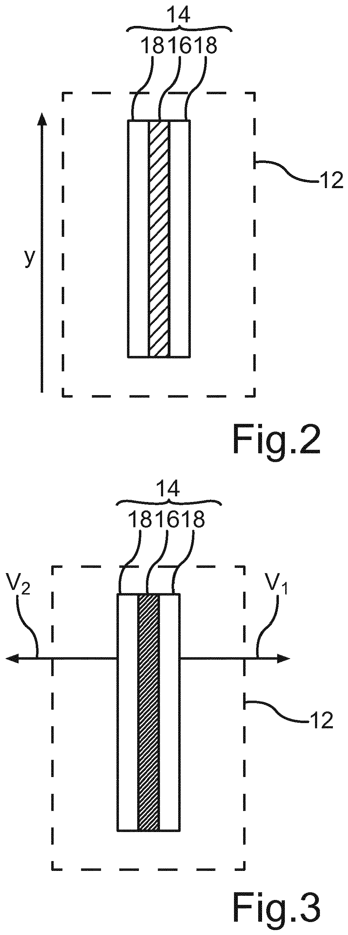

Fig. 2 exemplary shows the display unit 14 in a cross section whereby the display unit 14 is composed of said two planar, transparent screen elements 18, and the sight protection element 16 being sandwiched between the two transparent screen elements 18. Alternatively, the display unit 14 may be curved, double-curved, or three-dimensional. The display unit's 14 cross section of Fig. 2 may preferably be arranged along (or substantially along) a vertical axe Y of vehicle 10.

Fig. 3 shows display unit 14 in an optional operational mode, in which, preferably, the sight protection element 16 has a maximum degree of opacity. The transparent screen element 18 shown on the right of the cross section of the display unit 14 of Fig. 3 may, for example, be the transparent screen element 18 that is directed to a passenger compartment of vehicle 10, and a graphical element 28 (not shown) may be visible for a passenger only. The visibility of graphical content displayed by said transparent screen element 18 is visualized by arrow V1. The other transparent screen element 18, shown on the left, may display a graphical content, that is visible from the other side of display unit 14, for example for a pedestrian or other person that is looking through the windshield of vehicle 10 (V2). The image quality of both graphical contents is optimal for the passenger, as well as for a pedestrian outside vehicle 10.

In the optional method steps S2 and S3 (also cf. Fig. 1), control unit 20 may provide two control signals, of which each is transferred to one of the transparent screen elements 18. The controlling of a degree of transparency of the sight protection element 16 (S4) may depend, e.g., on a user input by a user of vehicle 10.

For example, a graphical element 28 displayed on the left transparent screen element 18 may be a text for welcoming a person outside said vehicle 10, or, for example, displaying a vehicle's status, e.g., an information that vehicle 10 has already been preheated. In other words, it is possible to show an additional image or graphical content to the outside and to the inside on the same area of the display.

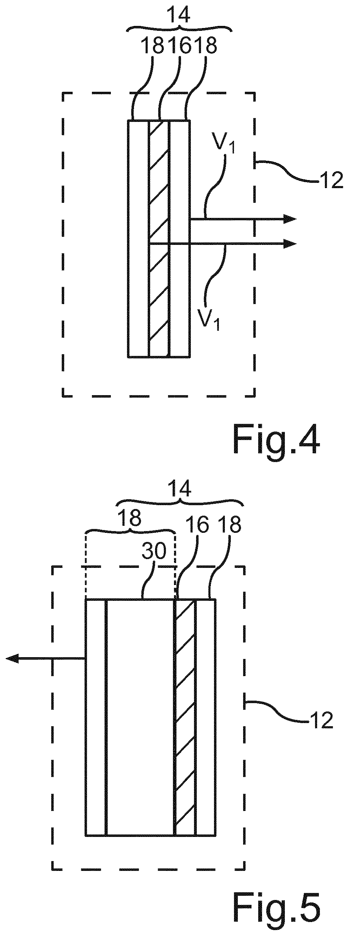

Fig. 4 exemplifies another operational mode, in which it is possible to double the luminosity of the same graphical element 28, when the sight protection element 16 is switched to a transparent state, preferably to a degree of maximum transparency. This may be achieved by, e.g. displaying the same graphical content, e.g. the same graphical user interface, on both transparent screen elements 18, such that the graphical elements 28 overlay when a person inside the vehicle 10 is looking on display unit 14. Like this, a certain depth effect of the graphical content is achieved. Because of parallax this is suited for simple and large graphics.

Fig. 5 shows an example of a display device 12 with a display unit 14, in which one of the transparent screen elements 18 comprises a spacer element 30, for example a glass screen, preferably made of or comprising mirrored glass. With such a spacer element 30, e.g., a spacer, it is possible to create the impression of two layers when the sight protection element 16 is in a transparent state.

Altogether, the examples show how a display device 12, e.g. a display, is provided, whereby the display device 12 has two transparent screen elements 18 and one sight protection element 16; preferably whereby the display device 12 has one switchable foil with two transparent OLEDs.

In a further example, a display unit 14 with a sandwich of one switchable foil and two T-OLEDs is provided. The image quality is optimal when seen from the inside and the outside. It is possible to show a different image to the outside and to the inside on the same area of the display (Fig. 3). It is possible to double the luminosity of the same GUI when the exemplary switchable foil is transparent (Fig. 4). It is possible to create the impression of two layers by using a spacer element 30, preferably a thick transparent spacer (Fig. 5).

## Claims

1. Display device (12) comprising a display unit (14), said display unit (14) being composed of two transparent screen elements (18) and one sight protection element (16);
wherein the sight protection element (16) is sandwiched between the two transparent screen elements (18), such that one display area of each of the two transparent screen elements (18) faces one of the planar areas of the sight protection element (16);
wherein one of the transparent screen elements (18) comprises a planar spacer element, said spacer element (30) being arranged in a planar manner at the sight protection element (16) to create a distance in the extent of the spacer element's (30) thickness between a display area of the transparent screen element (18) and the sight protection element (16);
**characterized in that**
the display device is configured such that the transparency of single areas of said sight protection element (16) may be changed.

2. Display device (12) according to claim 1, comprising a control unit (20), whereby the control unit (20) is configured to:
- provide a first control signal that describes a graphical element (28) to be displayed on one of the transparent screen elements (18, S2),
- provide a second control signal that describes a graphical element (28) to be displayed on the other of the transparent screen elements (18, S3), and
- control a degree of transparency of the sight protection element (16, S4).

3. Display device (12) according to claim 2, wherein the control unit (20) is configured to operate the display unit in:
- a first operational mode, in which the sight protection element (16) is at least partially transparent, preferably in which the sight protection element (16) has a maximum degree of transparency; and in which both provided control signals describe the same graphical element (28); and/or
- a second operational mode, in which the sight protection element (16) is at least partially transparent, preferably in which the sight protection element (16) has a maximum degree of transparency; and in which the provided control signals describe different graphical elements (28), and/or different areas of the respective transparent screen element (18), on which the graphical element (28) is to be displayed; and/or
- a third operational mode, in which the sight protection element (16) is at least partially opaque, preferably in which the sight protection element (16) has a maximum degree of opacity; and in which the provided control signals describe different graphical elements (28).

4. Display device (12) according to any one of the preceding claims, wherein
each planar area of the sight protection element (16) is in contact with one of the transparent screen elements' (18) display areas facing the sight protection element (16), preferably wherein the sight protection element is laminated to the transparent screen elements (18).

5. Display device (12) according to any one of the preceding claims, at least one of said transparent screen elements being a transparent organic light emitting diode display (T-OLED), a polymer dispersed liquid crystal screen display (PDCL), or a super liquid crystal display (S-LCD), or a monochrome, transparent, segmented liquid crystal display (LCD); preferably both of said transparent screen elements being transparent organic light emitting diode displays (T-OLED), polymer dispersed liquid crystal screen displays (PDCL), or super liquid crystal displays (S-LCD).

6. Motor vehicle (10) comprising a display device (12) according to any one of the preceding claims.

7. Motor vehicle (10) according to claim 6, wherein the display unit (14) of the display device (12) is arranged such that a graphical element (28) displayed on one of the transparent screen elements (18) is visible from the vehicle's (10) exterior, and such that a graphical element (28) displayed by the second transparent screen element (18) is visible from the vehicle's (10) interior.

8. Electronic device comprising a display device (12) according to any one of claims 1 to 5.

## Patentansprüche

1. Anzeigevorrichtung (12), die eine Anzeigeeinheit (14) umfasst, wobei die Anzeigeeinheit (14) aus zwei transparenten Bildschirmelementen (18) und einem Sichtschutzelement (16) besteht;
wobei das Sichtschutzelement (16) sandwichartig zwischen den zwei transparenten Bildschirmelementen (18) angeordnet ist, sodass ein Anzeigebereich jedes der zwei transparenten Bildschirmelemente (18) einem der flächigen Bereiche des Sichtschutzelements (16) zugewandt ist;
wobei eines der transparenten Bildschirmelemente (18) ein flächiges Abstandselement umfasst, wobei das Abstandselement (30) flächig an dem Sichtschutzelement (16) angeordnet ist, um einen Abstand im Ausmaß der Dicke des Abstandselements (30) zwischen einem Anzeigebereich des transparenten Bildschirmelements (18) und dem Sichtschutzelement (16) zu erzeugen;
**dadurch gekennzeichnet, dass** die Anzeigevorrichtung so konfiguriert ist, dass die Transparenz einzelner Bereiche des Sichtschutzelements (16) verändert werden kann.

2. Anzeigevorrichtung (12) nach Anspruch 1, die eine Steuereinheit (20) umfasst, wobei die Steuereinheit (20) dazu konfiguriert ist:
- ein erstes Steuersignal bereitzustellen, das ein grafisches Element (28) beschreibt, das auf einem der transparenten Bildschirmelemente (18, S2) angezeigt werden soll,
- ein zweites Steuersignal bereitzustellen, das ein grafisches Element (28) beschreibt, das auf dem anderen der transparenten Bildschirmelemente (18, S3) angezeigt werden soll, und
- einen Transparenzgrad des Sichtschutzelements (16, S4) zu steuern.

3. Anzeigevorrichtung (12) nach Anspruch 2, wobei die Steuereinheit (20) dazu konfiguriert ist, die Anzeigeeinheit zu betreiben in:
- einem ersten Betriebsmodus, in dem das Sichtschutzelement (16) zumindest teilweise transparent ist, bevorzugt in dem das Sichtschutzelement (16) einen maximalen Transparenzgrad aufweist; und in dem beide bereitgestellten Steuersignale das gleiche grafische Element (28) beschreiben; und/oder
- einem zweiten Betriebsmodus, in dem das Sichtschutzelement (16) zumindest teilweise transparent ist, bevorzugt in dem das Sichtschutzelement (16) einen maximalen Transparenzgrad aufweist; und in dem die bereitgestellten Steuersignale unterschiedliche grafische Elemente (28) und/oder unterschiedliche Bereiche des jeweiligen transparenten Bildschirmelements (18), auf denen das grafische Element (28) angezeigt werden soll, beschreiben; und/oder
- einem dritten Betriebsmodus, in dem das Sichtschutzelement (16) zumindest teilweise undurchsichtig ist, bevorzugt in dem das Sichtschutzelement (16) einen maximalen Grad von Undurchsichtigkeit aufweist; und in dem die bereitgestellten Steuersignale unterschiedliche grafische Elemente (28) beschreiben.

4. Anzeigevorrichtung (12) nach einem der vorstehenden Ansprüche, wobei
jeder flächige Bereich des Sichtschutzelements (16) mit einem der dem Sichtschutzelement (16) zugewandten Anzeigebereiche der transparenten Bildschirmelemente (18) in Kontakt ist, wobei bevorzugt das Sichtschutzelement an die transparenten Bildschirmelemente (18) laminiert ist.

5. Anzeigevorrichtung (12) nach einem der vorstehenden Ansprüche, wobei mindestens eines der transparenten Bildschirmelemente eine transparente organische Leuchtdiodenanzeige (T-OLED), eine polymerdispergierte Flüssigkristallbildschirmanzeige (PDCL) oder eine Super-Flüssigkristallanzeige (S-LCD) oder eine monochrome, transparente, segmentierte Flüssigkristallanzeige (LCD) ist; wobei bevorzugt beide transparenten Bildschirmelemente transparente organische Leuchtdiodenanzeigen (T-OLED), polymerdispergierte Flüssigkristallbildschirmanzeigen (PDCL) oder Super-Flüssigkristallanzeigen (S-LCD) sind.

6. Kraftfahrzeug (10), das eine Anzeigevorrichtung (12) nach einem der vorstehenden Ansprüche umfasst.

7. Kraftfahrzeug (10) nach Anspruch 6, wobei die Anzeigeeinheit (14) der Anzeigevorrichtung (12) so angeordnet ist, dass ein auf einem der transparenten Bildschirmelemente (18) angezeigtes grafisches Element (28) von der Außenseite des Fahrzeugs (10) sichtbar ist, und dass ein von dem zweiten transparenten Bildschirmelement (18) angezeigtes grafisches Element (28) von der Innenseite des Fahrzeugs (10) sichtbar ist.

8. Elektronische Vorrichtung, die eine Anzeigevorrichtung (12) nach einem der Ansprüche 1 bis 5 umfasst.

## Revendications

1. Dispositif d'affichage (12) comprenant une unité d'affichage (14), ladite unité d'affichage (14) étant composée de deux éléments d'écran transparents (18) et d'un élément de protection de la vue (16) ;
dans lequel l'élément de protection de la vue (16) est pris en sandwich entre les deux éléments d'écran transparents (18), de telle sorte qu'une zone d'affichage de chacun des deux éléments d'écran transparents (18) fait face à une des zones planes de l'élément de protection de la vue (16) ;
dans lequel un des éléments d'écran transparents (18) comprend un élément d'espacement plan, ledit élément d'espacement plan (30) étant agencé d'une manière plane au niveau de l'élément de protection de la vue (16) pour créer une distance dans la mesure de l'épaisseur de l'élément d'espacement (30) entre une zone d'affichage de l'élément d'écran transparent (18) et l'élément de protection de la vue (16) ;
**caractérisé en ce que** le dispositif d'affichage est configuré de telle sorte que la transparence de zones uniques dudit élément de protection de la vue (16) peut être modifiée.

2. Dispositif d'affichage (12) selon la revendication 1, comprenant une unité de commande (20), selon lequel l'unité de commande (20) est configurée pour :
- fournir un premier signal de commande qui décrit un élément graphique (28) devant être affiché sur un des éléments d'écran transparents (18, S2),
- fournir un second signal de commande qui décrit un élément graphique (28) devant être affiché sur l'autre des éléments d'écran transparents (18, S3), et
- commander un degré de transparence de l'élément de protection de la vue (16, S4).

3. Dispositif d'affichage (12) selon la revendication 2, dans lequel l'unité de commande (20) est configurée pour faire fonctionner l'unité d'affichage dans :
- un premier mode fonctionnel, dans lequel l'élément de protection de la vue (16) est au moins partiellement transparent, de préférence dans lequel l'élément de protection de la vue (16) présente un degré maximal de transparence ; et dans lequel les deux signaux de commande fournis décrivent le même élément graphique (28) ; et/ou
- un deuxième mode fonctionnel, dans lequel l'élément de protection de la vue (16) est au moins partiellement transparent, de préférence dans lequel l'élément de protection de la vue (16) présente un degré maximal de transparence ; et dans lequel les signaux de commande fournis décrivent différents éléments graphiques (28), et/ou différentes zones de l'élément d'écran transparent respectif (18), sur lequel l'élément graphique (28) doit être affiché ; et/ou
- un troisième mode fonctionnel, dans lequel l'élément de protection de la vue (16) est au moins partiellement opaque, de préférence dans lequel l'élément de protection de la vue (16) présente un degré maximal d'opacité ; et dans lequel les signaux de commande fournis décrivent différents éléments graphiques (28).

4. Dispositif d'affichage selon l'une quelconque des revendications précédentes, dans lequel
chaque zone plane de l'élément de protection de la vue (16) est en contact avec une des zones d'affichage des éléments d'écran transparents (18) faisant face à l'élément de protection de la vue (16), de préférence dans lequel l'élément de protection de la vue est stratifié sur les éléments d'écran transparents (18).

5. Dispositif d'affichage (12) selon l'une quelconque des revendications précédentes, au moins un desdits éléments d'écran transparents étant un affichage à diodes électroluminescentes organiques transparent (T-OLED), un écran d'affichage à cristaux liquides dispersés dans une matrice polymère (PDCL) ou un affichage à cristaux super liquides (S-LCD), ou un affichage à cristaux liquides (LCD) monochrome, transparent, segmenté ; de préférence les deux desdits éléments d'écran transparents étant des affichages à diodes électroluminescentes organiques transparents (T-OLED), des écrans d'affichage à cristaux liquides dispersés dans une matrice polymère (PDCL) ou des affichages à cristaux super liquides (S-LCD).

6. Véhicule à moteur (10) comprenant un dispositif d'affichage (12) selon l'une quelconque des revendications précédentes.

7. Véhicule à moteur (10) selon la revendication 6, dans lequel l'unité d'affichage (14) du dispositif d'affichage (12) est agencée de telle sorte qu'un élément graphique (28) affiché sur un des éléments d'écran transparent (18) est visible depuis l'extérieur du véhicule (10), et de telle sorte qu'un élément graphique (28) affiché par le second élément d'écran transparent (18) est visible depuis l'intérieur du véhicule (10).

8. Dispositif électronique comprenant un dispositif d'affichage (12) selon l'une quelconque des revendications 1 à 5.
